# EUROPEAN PATENT SPECIFICATION

(11) **EP 3 230 934 B1**
(45) Date of publication and mention of the grant of the patent: **17.06.2020**
(21) Application number: 15813511.1
(22) Date of filing: 11.12.2015
(51) Int. Cl.: G06Q 20/02, G06Q 20/08, G06Q 20/12, G06Q 20/16, G06Q 20/30, H04M 3/22, H04M 3/493, H04M 3/51, H04M 3/527, H04M 3/54, G06Q 20/34, H04M 15/00, H04M 15/06, H04M 17/00, H04W 4/24

(54) **METHOD AND APPARATUS FOR IMPLEMENTING TELEPHONE PAYMENTS**
VERFAHREN UND VORRICHTUNG ZUR IMPLEMENTIERUNG EINER BEZAHLUNG PER TELEFON
PROCÉDÉ ET APPAREIL POUR IMPLEMENTER LE PAIEMENT PAR TÉLÉPHONE

(30) Priority: 12.12.2014 GB 201422187
(43) Date of publication of application: 18.10.2017
(73) Proprietor: Aeriandi Limited, Oxford, Oxfordshire OX2 7HT (GB)
(72) Inventor: BRYARS, Daniel James, Oxford Oxfordshire OX2 7HT (GB); HARWOOD, Thomas Christopher, Oxford Oxfordshire OX2 7HT (GB)
(74) Representative: Bingham, Ian Mark
(86) International application number: PCT/GB2015/053900
(87) International publication number: WO 2016/092331

(56) References cited:
- WO-A1-01/05127
- WO-A2-2009/136163
- US-B1- 6 542 601

## Description

The present invention relates to a method and apparatus for implementing telephone payments.

In many industries it is desirable for businesses to allow for interaction with their customers/clients via telephone as part of their customer relationship management (CRM). For example, a large proportion of businesses that have a significant number of individual customers/clients have centralised contact/call centres staffed by agents that represent the business during telephone calls with customers/clients.

As well as dealing with general enquiries, providing product/service support, handling complaints, etc. merchants and service providers also often require the ability to allow customers/clients to action payments over the telephone. To do so, merchants and service providers often involve a third party payment service to enable payments to be made in relation to transactions between them and their customers/clients, as these third party payment services provide a single point of contact for the merchant/service provider to a multitude of payment processing entities (e.g. banks, credit card companies etc.) that they may be required to interact with in order to process the payment means used by their customers/clients (e.g. credit card, debit card, direct debit etc.).

In addition, third party payment services often take on responsibility for ensuring that the payments can be actioned in a secure fashion, in compliance with the necessary security standards (e.g. Payment Card Industry Data Security Standard (PCI DSS)). To do so, third party payment services provide means for capturing the key payment details of the customer/client and providing this information to the payment processing entities without this information being made available to the merchant/service provider or their agent. By way of example, this can be achieved by capturing the customer/client key payment details that are provided over a telephone call using automated technologies such as dual-tone multi-frequency (DTMF) signalling or voice recognition (VR) (e.g. Interactive Voice Response (IVR)), wherein automation allows the information to be captured without the involvement of an person, and then supressing the associated audio transmitted to the merchant/service provider or their agent in real-time. Such approaches significantly reduces the risk of fraud associated with payments made via telephone call.

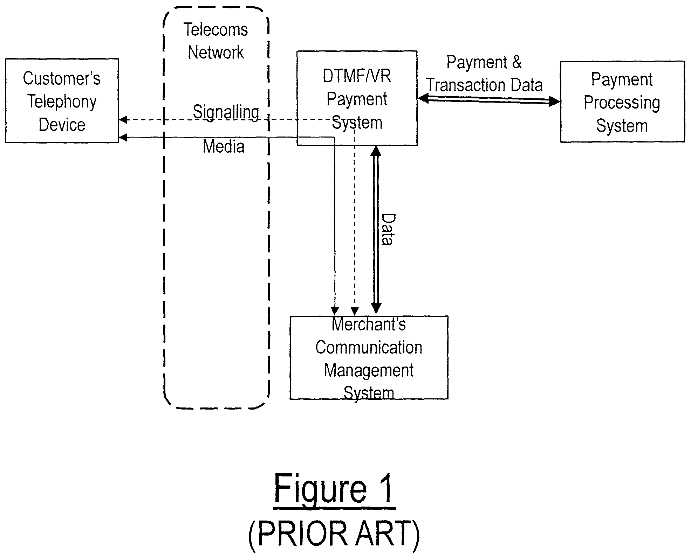

By way of example, Figure 1 illustrates schematically an example of a typical DTMF/VR payment processing scenario in which a telephone call between a customer and a merchant or service provider is routed to the communication management systems of the merchant or service provider via a third party DTMF/VR payment processing system. The routing of the call via the DTMF/VR payment processing system is necessary in order to allow the DTMF/VR payment processing system to capture the DTMF tones or speech transmitted over the call that communicates the customer's payment details (and, if required, to supress the tones/speech from the call audio that is transmitted to the merchant or service provider). The DTMF/VR payment processing system can then provide the customer's payment details to an appropriate payment processing system in order to action the payment.

WO2009/136163 discloses a telephone call processor for processing telephone calls comprising voice signals and data signals, the call processor comprising a first telephone interface and a second telephone interface, the call processor being operable in a first mode and in a second mode. In the first mode, the call processor is adapted to receive voice signals and data signals at the first telephone interface and to transmit voice signals and data signals via the second telephone interface. In the second mode, the call processor is adapted to receive voice signals and data signals at the first telephone interface, to block data signals from being transmitted via the second telephone interface and optionally to transmit voice signals via the second telephone interface.

The present inventors have recognised that there are various scenarios in which a merchant/service provider will want to be able to allow customers/clients to action payments over the telephone even though the majority of calls between customers/clients and the merchant/service provider will not require any payments (e.g. calls relating solely to general enquiries, product/service support, complaints etc.). In these scenarios, conventional telephone payment processes that route all of the telephone calls via the third party telephone payment processing system, just in case a payment may be required, leads to an unnecessary increase in the latency for all of these telephone calls, and also requires that there is sufficient bandwidth available to transport the maximum number of concurrent calls to third party telephone payment processing system.

The present inventors have therefore developed a process for implementing telephone payments that overcomes or at least mitigates the disadvantages associated with these conventional telephone payment processes.

According to a first aspect there is provided a method of implementing a payment in relation to a telephone call between a customer and a merchant or service provider, the telephone call consisting of a signalling component and a media component. The method comprises, when establishing the telephone call, routing the signalling component to the merchant/service provider via a payment service system and routing the media component directly to the merchant/service provider. The method further comprises, at a communication management system of the merchant or service provider, sending an indication, said indication including call identification data of the telephone call, that the customer is required to make a payment to the payment service system and, at the payment service system, upon receipt of the indication that the customer is required to make a payment, using the signalling component of the telephone call to implement a redirection of the media component of the telephone call via the payment service system, extracting payment details of the customer from the redirected media component, and providing the payment details to a payment processing system to action the payment. The payment details are communicated from the customer to the payment service system over the media component using any of DTMF audio tones and spoken word (e.g. to be captured using Voice Recognition (VR)).

The method may further comprise, at the payment service system, upon receipt of confirmation that the payment processing system has actioned the payment, using the signalling component of the telephone call to implement a further redirection of the media component of the telephone call directly to the merchant/service provider.

The method may further comprise, at the communication management system, providing transaction information to the payment service system, the transaction information specifying details of the payment required in relation to a transaction between the customer and the merchant/service provider and, at the payment service system, sending the received transaction information to the payment processing system with the payment details.

The method may further comprise, at the communication management system of the merchant/service provider, upon determining that the customer is required to make a payment, determining call identification data for the telephone call, and sending the call identification data to the payment service system and, at the third party service system, receiving the call identification data from the communication management system, and using the received call identification data to identify the telephone call for which the media component is to be redirected.

The method may further comprise, at the communication management system of the merchant/service provider, upon determining that the customer is required to make a payment, determining call identification data for the telephone call and transaction identification data for identifying the transaction information associated with the payment required, and sending the call identification data and the transaction identification data to the payment service system; and, at the third party service system, receiving the call identification data and the transaction identification data from the communication management system, using the received call identification data to identify the telephone call for which the media component is to be redirected, using the received transaction identification data to identify the transaction information for the payment, and correlating the transaction information with the identified telephone call.

Correlating the transaction information with the identified telephone call enables the payment service system to associate the transaction information with the payment details communicated over the media component of the telephone call, and the payment service system may then send the transaction information and the associated payment details to the payment processing system to action the payment.

The transaction identification data for identifying the transaction information associated with the payment required may comprise one or more of a unique agent identifier for an agent of the merchant/service provider that has provided the transaction information to the payment service system, a unique computer identifier for a computer of the merchant/service provider that has provided the transaction information to the payment service system, and a unique transaction identifier assigned to the payment required.

The call identification data may comprise one or more of a timestamp for the start of the telephone call, a telephone number of the customer, a telephone number of the merchant/service provider to which the telephone call has been routed, a telephone number of an agent of the merchant/service provider that is handling the telephone call, header information extracted from data packets that comprise the telephone call, and a unique call identifier assigned to the telephone call.

The payment details extracted from the redirected media may comprise one or more of a primary account number, credit card number, or debit card number, a card verification code, an card issue number, a card date of validity and/or date of expiry, and a password or pin code.

According to a second aspect there is provided a communication management system of a merchant/service provider configured to enable implementation of a payment in relation to a telephone call between a customer and the merchant/service provider, the telephone call consisting of a signalling component and a media component. The communication management system comprises a first receiver configured to receive the signalling component of the telephone call, the signalling component having been routed to the communication management system via a payment service system, a second receiver configured to receive directly the media component of the telephone call, an interface configured to accept an input indicating that the customer is required to make a payment, a processor configured to generate an indication that the customer is required to make a payment including call identification data of the telephone call, and a transmitter configured to send the indication to the payment service system.

According to a third aspect there is provided a payment service system configured to implement a payment in relation to a telephone call between a customer and a merchant/service provider, the telephone call consisting of a signalling component and a media component. The payment service system comprises a first transceiver configured to receive the signalling component of the telephone call, the signalling component having been routed via a payment service system, and to implement onward routing of the signalling component to the merchant/service provider and further configured to receive directly the media component of the telephone call, a receiver configured to receive an indication that the customer is required to make a payment from a communication management system of the merchant/service provider, said indication including call identification data of the telephone call, a processor configured to, upon receipt of the indication that the customer is required to make a payment, use the signalling component of the telephone call to implement a redirection of the media component of the telephone call via the payment service system, extract payment details of the customer from the redirected media component, and generate a payment request including the payment details, and a transmitter configured to send the payment request including the payment details to a payment processing system to action the payment.

The payment service system may further comprise a second transceiver configured to receive the redirected media component of the telephone call, and to implement onward routing of at least portions of the redirected media component to the merchant/service provider.

The processor may be configured to, upon receipt of confirmation that the payment processing system has actioned the payment, use the signalling component of the telephone call to implement a further redirection of the media component of the telephone call directly to the merchant/service provider.

According to a fourth aspect there is provided a method of operating a payment service system configured to implement a payment in relation to a telephone call between a customer and a merchant/service provider, the telephone call consisting of a signalling component and a media component. The method comprises receiving the signalling component of the telephone call, the signalling component having been routed via a payment service system, and implementing onward routing of the signalling component to the merchant/service provider, receiving directly the media component of the telephone call, receiving an indication that the customer is required to make a payment from a communication management system of the merchant/service provider, said indication including call identification data of the telephone call, and upon receipt of the indication that the customer is required to make a payment, using the signalling component of the telephone call to implement a redirection of the media component of the telephone call via the payment service system, extracting payment details of the customer from the redirected media component, and sending a payment request including the payment details to a payment processing system to action the payment.

The method may further comprise receiving the redirected media component of the telephone call, and implementing onward routing of at least portions of the redirected media component to the merchant/service provider.

The method may further comprise, upon receipt of confirmation that the payment processing system has actioned the payment, using the signalling component of the telephone call to implement a further redirection of the media component of the telephone call directly to the merchant/service provider.

According to a fifth aspect there is provided a computer readable medium storing computer implementable instructions which when implemented by a programmable computer cause the computer to perform the method of the sixth aspect.

The present invention will now be more particularly described by way of example only with reference to the accompanying drawings, in which:
Figure 1 illustrates schematically an example of a typical telephone payment processing scenario;
Figure 2a to 2e illustrate schematically an embodiment of a telephone payment process implemented in accordance with the methods described herein;
Figure 3 illustrates schematically an embodiment of a communication management system of a merchant/service provider as described herein; and
Figure 4 illustrates schematically an embodiment of a telephone payment system as described herein.

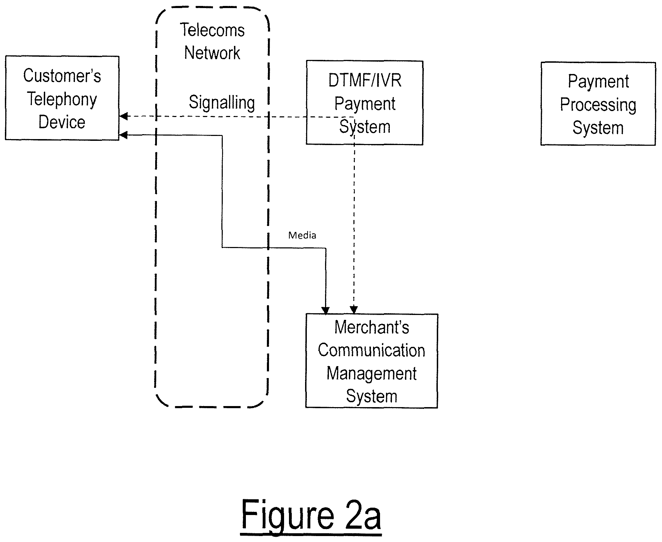

Figure 2a to 2e illustrate schematically an embodiment of a telephone payment process in which a payment is implemented in relation to a telephone call between a customer and a merchant/service provider, the telephone call consisting of a signalling component and a media component In this process, when establishing the telephone call, the signalling component is routed to the merchant/service provider via a payment service system whilst the media component is routed directly to the merchant/service provider. In this regard, the telecommunications network carrying the telephone call routes the media component to a communication management system of the merchant/service provider without passing through the payment service system (se Figure 2a).

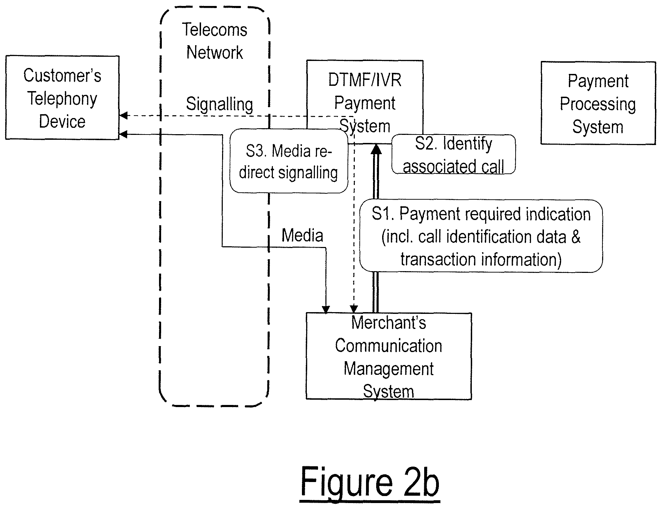

Then, if it is determined that a payment is required in relation to the telephone call, the communication management system of the merchant/service provider generates an indication that a payment is required and sends this indication to the payment service system (S1). Upon receipt of the indication that the customer is required to make a payment, the payment service system uses the signalling component of the telephone call to implement a redirection of the media component of the telephone call via the payment service system (S3) (see Figure 2b).

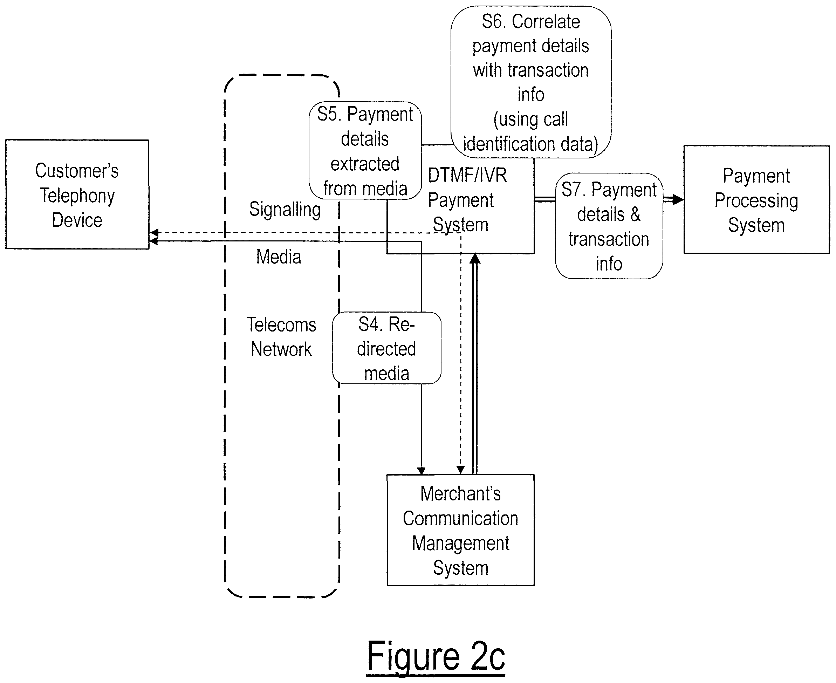

When the media component of the telephone call has been redirected via the payment service system (S4), the payment service system can the extracting payment details of the customer from the redirected media component (S5) (e.g. from DTMF tones or speech communicated using the media component). The payment service system can then provide (S7) the payment details to a payment processing system to action the payment (see Figure 2c).

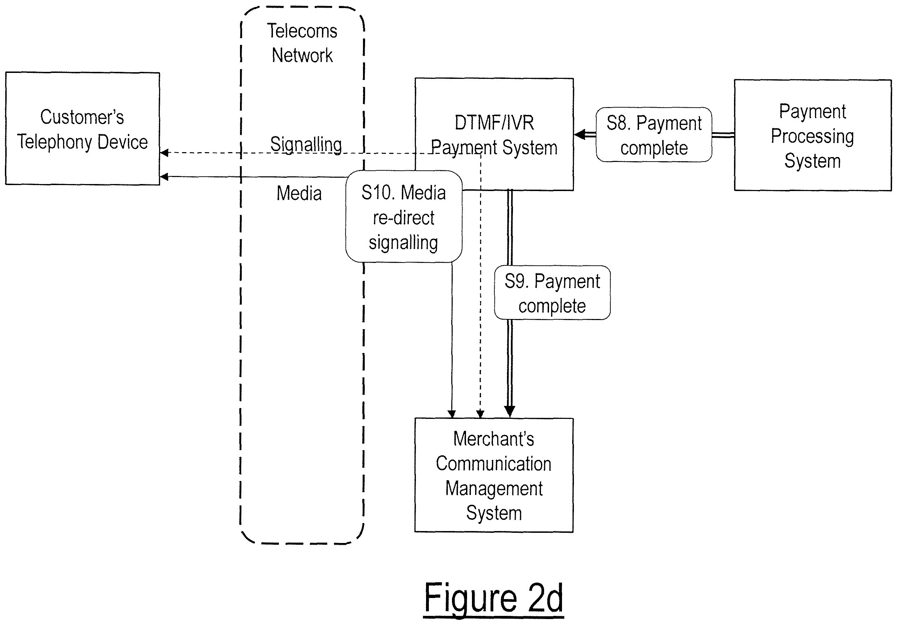

When the payment processing system has actioned the payment, the payment processing system will inform the payment service system that the payment is complete (S8). Upon receipt of confirmation that the payment processing system has actioned the payment, the payment service system again makes use of the signalling component of the telephone call to implement a further redirection of the media component of the telephone call directly to the merchant/service provider (S10) (see Figure 2d).

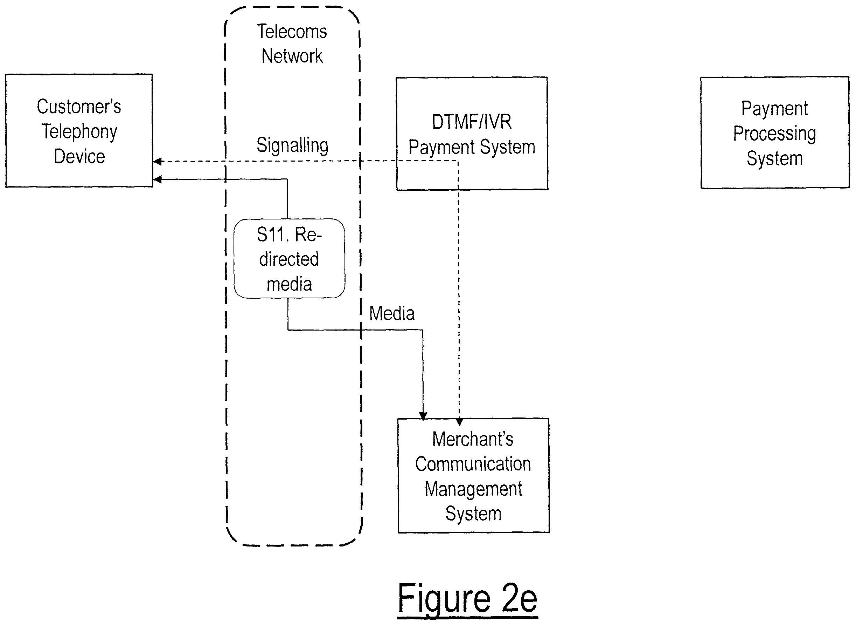

The media component of the telephone call is then again redirected via the payment service system by the telecommunications network (S11) (see Figure 2e). The routing of the signalling component of the telephone call via the payment service system is maintained for the duration of the call, both before and after any telephone payments have been implemented.

The step of informing the payment service system that a payment is required in relation to one of the telephone calls for which the signalling component that is being routed via the payment service system will typically involve an agent at the merchant/service provider making use of a separate interface (e.g. a web interface) with the payment service system provided on their computer to inform the payment service system that a payment is required. However, the payment service system then needs to identify the telephone call with which this particular payment instance is associated.

In order to allow the payment service system to identify the telephone call with which this particular payment instance is associated, the communication management system of a merchant/service provider determines some call identification data from the call.

For example, the call identification data that can determined by the communication management system can include, but is not limited to, one or more of a timestamp for the start of the telephone call, a telephone number of the customer, a telephone number of the merchant/service provider to which the telephone call has been routed, a telephone number of the agent of the merchant/service provider that is handling the telephone call, some header information that can be extracted from data packets that comprise the telephone call, and a unique call identifier assigned to the telephone call.

The communication management system then sends the call identification data and the transaction identification data to the payment service system (S1) (see Figure 2b). The payment service system can then use the call identification data to identify the telephone call to which the required payment relates (S2). The payment service system can then initiate the redirection of the media component of the identified call (S3).

In addition, transaction information specifying the details of the payment required (e.g. amount payee, payer, payee's reference etc.) can be included in the indication sent by the communication management system to the payment service system (S1) together with the call identification data. This then makes it straightforward for the payment service system to associate the transaction information with the payment details obtained from the media component of the telephone call identified by the call identification data that accompanied the transaction information.

Alternatively, the indication sent by the communication management system to the payment service system can include transaction identification data (as opposed to the transaction information), which can then be used to associate the identified telephone call (and the extracted payment details) with transaction information that is subsequently received from the communication management system. By way of example, the transaction identification data that could be determined by the communication management system and sent to the payment service system can include, but is not limited to, one or more of a unique agent identifier for an agent of the merchant/service provider that is to handle the call, a unique computer identifier for a computer of the merchant/service provider that is to be involved in handling a transaction in relation to the call, and a unique transaction identifier that is assigned to any transactions required in relation to the call.

The present inventors have also recognised that, when using suppression of the audio that is transmitted to the merchant/service provider to hide/obscure the payment details conveyed in the audio (e.g. DTMF tones or speech), it is possible that some or all of this audio can remain in the media component transmitted to the merchant/service provider. For example, this can occur due to poor conversion of the audio within the telecommunications network and/or feedback at the telephony device of the customer. It is therefore proposed herein to provide a buffer at the payment service system that can be used when implementing a telephone payment, after the media component of the telephone call has been redirected via the payment service system, to introduce a delay into the transmission of the media and store up the audio stream for a short time. Then, when the payment service system detects audio that must be supressed (e.g. a DTMF tone or appropriately timed speech) the buffer is cleared, causing the audio to be silenced for the duration of the buffer length. The size of the buffer can be configurable as their is trade-off between the latency introduced by the buffer and "bleed through" of audio that should be suppressed.

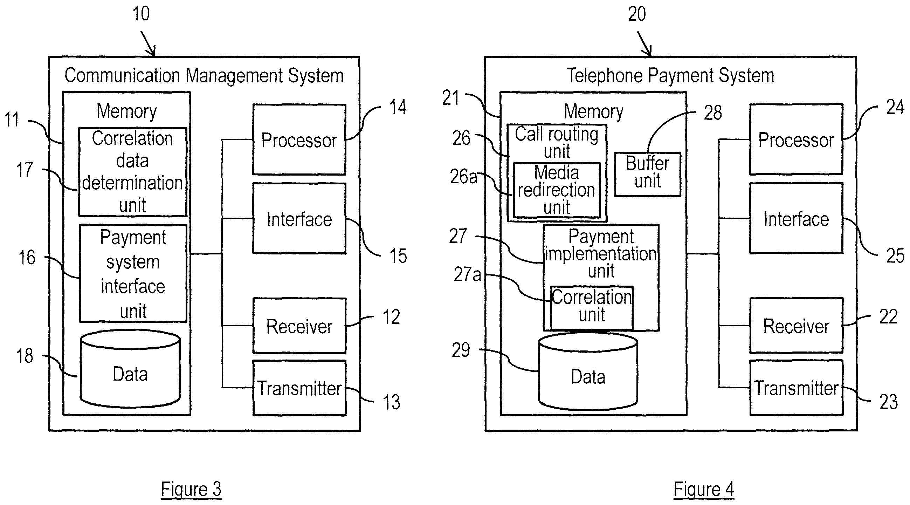

Figure 3 illustrates schematically an embodiment of a communication management system 10 of a merchant/service provider suitable for implementing the methods described herein. The system 10 can be implemented as a combination of computer hardware and software, and comprises a memory 11, a receiver 12, a transmitter 13, a processor 14 and an interface 15. Whilst the system 10 has been illustrated schematically as single device (e.g. server or computer) comprising a single occurrence of each of the functional elements listed above, the system could equally comprise multiple occurrences of each functional element and could equally be provided by a plurality of separate devices that cooperate to provide the required functionality. By way of example, separate aspects of the functionality of the system could be distributed between a number of separate servers or computer devices, such that a first group of one or more servers/computer devices implements all of the necessary processing and interface functions whilst a second group of one or more servers/computer devices provides database functionality (e.g. including storage, security, data integrity, data redundancy etc). The memory 11 typically stores the various programs/executable files that are implemented by the processor 14, including a payment system interface unit 16, a correlation data determination unit 17 and any data 18 that may be of use to the system 10.

Figure 4 illustrates schematically an embodiment of a third party service system 20 suitable for implementing the methods described herein. The system 20 can be implemented as a combination of computer hardware and software, and comprises a memory 21, a receiver 22, a transmitter 23, a processor 24 and an interface 25. Whilst the system 20 has been illustrated schematically as single device (e.g. server or computer) comprising a single occurrence of each of the functional elements listed above, the system could equally comprise multiple occurrences of each functional element and could equally be provided by a plurality of separate devices that cooperate to provide the required functionality. By way of example, separate aspects of the functionality of the system could be distributed between a number of separate servers or computer devices, such that a first group of one or more servers/computer devices implements all of the necessary processing and interface functions whilst a second group of one or more servers/computer devices provides database functionality (e.g. including storage, security, data integrity, data redundancy etc). The memory 21 typically stores the various programs/executable files that are implemented by the processor 24, including a call routing unit 26 including a media redirection unit 26a, a payment implementation unit 27 including a correlation unit 27a, a buffer unit 28, and any data 29 that may be of use to the system 20.

It will be appreciated that individual items described above may be used on their own or in combination with other items shown in the drawings or described in the description and that items mentioned in the same passage as each other or the same drawing as each other need not be used in combination with each other. In addition, any reference to "comprising" or "consisting" is not intended to be limiting in any way whatsoever and the reader should interpret the description and claims accordingly.

## Claims

1. A method of implementing a payment in relation to a telephone call between a customer and a merchant/service provider, the telephone call consisting of a signalling component and a media component, the method comprising:
when establishing the telephone call, routing the signalling component to the merchant/service provider via a payment service system and routing the media component directly from the customer to the merchant/service provider;
at a communication management system of the merchant/service provider, sending an indication that the customer is required to make a payment to the payment service system (S1); and
at the payment service system, upon receipt of the indication, said indication including call identification data of the telephone call, that the customer is required to make a payment, using the signalling component of the telephone call to implement a redirection of the media component of the telephone call via the payment service system (S3), extracting payment details of the customer from the redirected media component (S5), and providing (S7) the payment details to a payment processing system to action the payment, wherein the payment details are communicated from the customer to the payment service system over the media component using any of DTMF audio tones and spoken word (e.g. using Interactive Voice Recognition (IVR)).

2. The method of claim 1, and further comprising:
at the payment service system, upon receipt of confirmation that the payment processing system has actioned the payment (S8), using the signalling component of the telephone call to implement a further redirection of the media component of the telephone call directly from the customer to the merchant/service provider (S10).

3. The method of any of claims 1 or 2, and further comprising:
at the communication management system, providing transaction information to the payment service system, the transaction information specifying details of the payment required in relation to a transaction between the customer and the merchant/service provider; and
at the payment service system, sending the received transaction information to the payment processing system with the payment details.

4. The method of any of claims 1 to 3, and further comprising:
at the communication management system of the merchant/service provider, upon determining that the customer is required to make a payment, determining the call identification data for the telephone call (S2), and sending the call identification data to the payment service system; and
at the third party service system, receiving the call identification data from the communication management system, and using the received call identification data to identify the telephone call for which the media component is to be redirected.

5. The method of claim 3, and further comprising:
at the communication management system of the merchant/service provider, upon determining that the customer is required to make a payment, determining the call identification data for the telephone call and transaction identification data for identifying the transaction information associated with the payment required, and sending the call identification data and the transaction identification data to the payment service system; and
at the third party service system, receiving the call identification data and the transaction identification data from the communication management system, using the received call identification data to identify the telephone call for which the media component is to be redirected, using the received transaction identification data to identify the transaction information for the payment, and correlating the transaction information with the identified telephone call.

6. The method of claim 5, wherein correlating the transaction information with the identified telephone call enables the payment service system to associate the transaction information with the payment details communicated over the media component of the telephone call, and the payment service system then sends the transaction information and the associated payment details to the payment processing system to action the payment.

7. The method of any of claims 5 or 6, wherein the transaction identification data for identifying the transaction information associated with the payment required comprises:
a unique agent identifier for an agent of the merchant/service provider that has provided the transaction information to the payment service system;
a unique computer identifier for a computer of the merchant/service provider that has provided the transaction information to the payment service system; and
a unique transaction identifier assigned to the payment required.

8. The method of any of claims 4 to 7, wherein the call identification data comprises one or more of:
a timestamp for the start of the telephone call;
a telephone number of the customer;
a telephone number of the merchant/service provider to which the telephone call has been routed;
a telephone number of an agent of the merchant/service provider that is handling the telephone call;
header information extracted from data packets that comprise the telephone call; and
a unique call identifier assigned to the telephone call.

9. The method of any preceding claim, wherein the payment details extracted from the redirected media comprises one or more of:
a primary account number, credit card number, or debit card number;
a card verification code;
an card issue number;
a card date of validity and/or date of expiry; and
a password or pin code.

10. A communication management system (10) of a merchant/service provider configured to enable implementation of a payment in relation to a telephone call between a customer and the merchant/service provider, the telephone call consisting of a signalling component and a media component, the communication management system comprising:
a first receiver (12) configured to receive the signalling component of the telephone call, the signalling component having been routed to the communication management system (10) via a payment service system;
a second receiver (22) configured to receive directly from the customer the media component of the telephone call;
an interface (15) configured to accept an input indicating that the customer is required to make a payment;
a processor (14) configured to generate an indication that the customer is required to make a payment including call identification data of the telephone call; and
a transmitter (13) configured to send the indication to the payment service system.

11. A payment service system (20) configured to implement a payment in relation to a telephone call between a customer and a merchant/service provider, the telephone call consisting of a signalling component and a media component, the payment service system comprising:
a first transceiver (22, 23) configured to receive the signalling component of the telephone call, the signalling component having been routed via a payment service system (20), and to implement onward routing of the signalling component to the merchant/service provider;
a receiver (22) configured to receive an indication that the customer is required to make a payment from a communication management system of the merchant/service provider, said indication including call identification data of the telephone call;
a processor (24) configured to, upon receipt of the indication that the customer is required to make a payment, use the signalling component of the telephone call to implement a redirection of the media component of the telephone call via the payment service system (20) to receive directly from the customer the media component of the telephone call, extract payment details of the customer from the redirected media component, and generate a payment request including the payment details; and
a transmitter (23) configured to send the payment request including the payment details to a payment processing system to action the payment.

12. The payment service system (20) of claim 11, and further comprising a second transceiver (22, 23) configured to receive the redirected media component of the telephone call, and to implement onward routing of at least portions of the redirected media component to the merchant/service provider.

13. The payment service system (20) of any of claims 11 or 12, wherein the processor (24) is configured to, upon receipt of confirmation that the payment processing system has actioned the payment, use the signalling component of the telephone call to implement a further redirection of the media component of the telephone call directly from the customer to the merchant/service provider.

14. A method of operating a payment service system configured to implement a payment in relation to a telephone call between a customer and a merchant/service provider, the telephone call consisting of a signalling component and a media component, the method comprising:
receiving the signalling component of the telephone call, the signalling component having been routed via a payment service system (20), and implementing onward routing of the signalling component to the merchant/service provider;
receiving an indication that the customer is required to make a payment from a communication management system of the merchant/service provider, said indication including call identification data of the telephone call;
upon receipt of the indication that the customer is required to make a payment, using the signalling component of the telephone call to implement a redirection of the media component of the telephone call via the payment service system to receive directly from the customer the media component of the telephone call, extracting payment details of the customer from the redirected media component; and
sending a payment request including the payment details to a payment processing system to action the payment.

15. The method of claim 14, and further comprising:
receiving the redirected media component of the telephone call, and implementing onward routing of at least portions of the redirected media component to the merchant/service provider.

16. The method of any of claims 14 or 15, and further comprising:
upon receipt of confirmation that the payment processing system has actioned the payment, using the signalling component of the telephone call to implement a further redirection of the media component of the telephone call directly from the customer to the merchant/service provider.

17. A computer readable medium storing computer implementable instructions which when implemented by a programmable computer cause the computer to perform the method of any of claims 1 to 9 and 14 to 16.

## Patentansprüche

1. Verfahren zur Implementierung einer Zahlung in Bezug auf einen Telefonanruf zwischen einem Kunden und einem Händler/Dienstanbieter, wobei der Telefonanruf aus einer Signalisierungskomponente und einer Medienkomponente besteht, wobei das Verfahren Folgendes umfasst:
wenn ein Telefonanruf durchgeführt wird, Routen der Signalisierungskomponente zu dem Händler/Dienstanbieter über ein Zahlungsdienstsystem und Routen der Medienkomponente direkt von dem Kunden zu dem Händler/Dienstanbieter;
an einem Kommunikationsmanagementsystem des Händlers/Dienstanbieters, Senden eines Hinweises, dass der Kunde eine Zahlung an das Zahlungsdienstsystem vornehmen muss (S1); und
an dem Zahlungsdienstsystem, bei Empfang des Hinweises, dass der Kunde eine Zahlung vornehmen muss, wobei der Hinweis Anrufidentifikationsdaten des Telefonanrufs umfasst, Verwenden der Signalisierungskomponente des Telefonanrufs zum Implementieren einer Umleitung der Medienkomponente des Telefonanrufs über das Zahlungsdienstsystem (S3), Extrahieren von Zahlungsdetails des Kunden aus der umgeleiteten Medienkomponente (S5) und Bereitstellen (S7) der Zahlungsdetails an ein Zahlungsverarbeitungssystem zum Tätigen der Zahlung, wobei die Zahlungsdetails mittels jeglicher von DTMF-Audiotönen und gesprochenem Wort (z.B. mittels interaktiver Spracherkennung (IVR*-Interactive Voice Recognition*)) über die Medienkomponente von dem Kunden an das Zahlungsdienstsystem kommuniziert werden.

2. Verfahren nach Anspruch 1, welches ferner Folgendes umfasst:
an dem Zahlungsdienstsystem, bei Empfang einer Bestätigung, dass das Zahlungsverarbeitungssystem die Zahlung getätigt hat (S8), Verwenden der Signalisierungskomponente des Telefonanrufs zum Implementieren einer weiteren Umleitung der Medienkomponente des Telefonanrufs direkt von dem Kunden zu dem Händler/Dienstanbieter (S10).

3. Verfahren nach einem der Ansprüche 1 oder 2, welches ferner Folgendes umfasst:
an dem Kommunikationsmanagementsystem, Bereitstellen von Transaktionsinformationen an das Zahlungsdienstsystem, wobei die Transaktionsinformationen Details der Zahlung spezifizieren, die in Bezug auf eine Transaktion zwischen dem Kunden und dem Händler/Dienstanbieter erforderlich sind; und
an dem Zahlungsdienstsystem, Senden der empfangenen Transaktionsinformationen mit den Zahlungsdetails an das Zahlungsverarbeitungssystem.

4. Verfahren nach einem der Ansprüche 1 bis 3, welches ferner Folgendes umfasst:
an dem Kommunikationsmanagementsystem des Händlers/Dienstanbieters, bei Bestimmung, dass der Kunde eine Zahlung vornehmen muss, Bestimmen der Anrufidentifikationsdaten für den Telefonanruf (S2) und Senden der Anrufidentifikationsdaten an das Zahlungsdienstsystem; und
an dem Drittanbietersystem, Empfangen der Anrufidentifikationsdaten von dem Kommunikationsmanagementsystem und Verwenden der empfangenen Anrufidentifikationsdaten zum Identifizieren des Telefonanrufs, für welchen die Medienkomponente umgeleitet werden soll.

5. Verfahren nach Anspruch 3, welches ferner Folgendes umfasst:
an dem Kommunikationsmanagementsystem des Händlers/Dienstanbieters, bei Bestimmung, dass der Kunde eine Zahlung vornehmen muss, Bestimmen der Anrufidentifikationsdaten für den Telefonanruf und der Transaktionsidentifikationsdaten zum Identifizieren der Transaktionsinformationen im Zusammenhang mit der erforderlichen Zahlung und Senden der Anrufidentifikationsdaten und der Transaktionsidentifikationsdaten an das Zahlungsdienstsystem; und
an dem Drittanbietersystem, Empfangen der Anrufidentifikationsdaten und der Transaktionsidentifikationsdaten von dem Kommunikationsmanagementsystem, Verwenden der empfangenen Anrufidentifikationsdaten zum Identifizieren des Telefonanrufs, für welchen die Medienkomponente umgeleitet werden soll, Verwenden der empfangenen Transaktionsidentifikationsdaten zum Identifizieren der Transaktionsinformationen für die Zahlung und Korrelieren der Transaktionsinformationen mit dem identifizierten Telefonanruf.

6. Verfahren nach Anspruch 5, wobei das Korrelieren der Transaktionsinformationen mit dem identifizierten Telefonanruf es dem Zahlungsdienstsystem ermöglicht, die Transaktionsinformationen mit den Zahlungsdetails zu assoziieren, die über die Medienkomponente des Telefonanrufs kommuniziert werden, und das Zahlungsdienstsystem dann die Transaktionsinformationen und die assoziierten Zahlungsdetails an das Zahlungsverarbeitungssystem sendet, um die Zahlung zu tätigen.

7. Verfahren nach einem der Ansprüche 5 oder 6, wobei die Transaktionsidentifikationsdaten zum Identifizieren der Transaktionsinformationen im Zusammenhang mit der erforderlichen Zahlung Folgendes umfassen:
eine eindeutige Agentenkennung für einen Agenten des Händlers/Dienstanbieters, der die Transaktionsinformationen an das Zahlungsdienstsystem bereitgestellt hat;
eine eindeutige Computerkennung für einen Computer des Händlers/Dienstanbieters, der die Transaktionsinformationen an das Zahlungsdienstsystem bereitgestellt hat; und
eine eindeutige Transaktionskennung, die der erforderlichen Zahlung zugewiesen ist.

8. Verfahren nach einem der Ansprüche 4 bis 7, wobei die Anrufidentifikationsdaten eines oder mehrere der Folgenden umfassen:
einen Zeitstempel für den Beginn des Telefonanrufs;
eine Telefonnummer des Kunden;
eine Telefonnummer des Händlers/Dienstanbieters, zu welchem der Telefonanruf geroutet wurde;
eine Telefonnummer eines Agenten des Händlers/Dienstanbieters, der den Telefonanruf abwickelt;
Kopfzeileninformationen extrahiert aus Datenpaketen, die den Telefonanruf umfassen; und
eine eindeutige Anrufkennung, die dem Telefonanruf zugewiesen ist.

9. Verfahren nach einem der vorhergehenden Ansprüche, wobei die Zahlungsdetails, die aus den umgeleiteten Medien extrahiert werden, eines oder mehrere der Folgenden umfassen:
eine primäre Kontonummer, Kreditkartennummer oder Debitkartennummer;
einen Kartenverifizierungscode;
eine Kartenausgabenummer;
ein Kartengültigkeitsdatum und/oder -ablaufdatum; und
ein Passwort oder einen Pin-Code.

10. Kommunikationsmanagementsystem (10) eines Händlers/Dienstanbieters, das dazu konfiguriert ist, die Implementierung einer Zahlung in Bezug auf einen Telefonanruf zwischen einem Kunden und dem Händler/Dienstanbieter zu ermöglichen, wobei der Telefonanruf aus einer Signalisierungskomponente und einer Medienkomponente besteht, wobei das Kommunikationsmanagementsystem Folgendes umfasst:
einen ersten Empfänger (12), der zum Empfangen der Signalisierungskomponente des Telefonanrufs konfiguriert ist, wobei die Signalisierungskomponente über ein Zahlungsdienstsystem zu dem Kommunikationsmanagementsystem (10) geroutet wurde;
einen zweiten Empfänger (22), der zum Empfangen der Medienkomponente des Telefonanrufs direkt von dem Kunden konfiguriert ist;
eine Schnittstelle (15), die zum Akzeptieren einer Eingabe, welche angibt, dass der Kunde eine Zahlung vornehmen muss, konfiguriert ist;
einen Prozessor (14), der zum Erzeugen eines Hinweises, dass der Kunde eine Zahlung vornehmen muss, welcher Anrufidentifikationsdaten des Telefonanrufs umfasst, konfiguriert ist; und
einen Sender (13), der zum Senden des Hinweises an das Zahlungsdienstsystem konfiguriert ist.

11. Zahlungsdienstsystem (20), das zum Implementieren einer Zahlung in Bezug auf einen Telefonanruf zwischen einem Kunden und einem Händler/Dienstanbieter konfiguriert ist, wobei der Telefonanruf aus einer Signalisierungskomponente und einer Medienkomponente besteht, wobei das Zahlungsdienstsystem Folgendes umfasst:
einen ersten Sendeempfänger (22, 23), der zum Empfangen der Signalisierungskomponente des Telefonanrufs, wobei die Signalisierungskomponente über ein Zahlungsdienstsystem (20) geroutet wurde, und zum Implementieren einer Weiterleitung der Signalisierungskomponente an den Händler/Dienstanbieter konfiguriert ist;
einen Empfänger (22), der zum Empfangen eines Hinweises, dass der Kunde eine Zahlung vornehmen muss, von einem Kommunikationsmanagementsystem des Händlers/Dienstanbieters, wobei der Hinweis Anrufidentifikationsdaten des Telefonanrufs umfasst, konfiguriert ist;
einen Prozessor (24), der, bei Empfang des Hinweises, dass der Kunde eine Zahlung vornehmen muss, zum Verwenden der Signalisierungskomponente des Telefonanrufs zum Implementieren einer Umleitung der Medienkomponente des Telefonanrufs über das Zahlungsdienstsystem (20), um die Medienkomponente des Telefonanrufs direkt von dem Kunden zu empfangen, zum Extrahieren von Zahlungsdetails des Kunden aus der umgeleiteten Medienkomponente und zum Erzeugen einer Zahlungsaufforderung, welche die Zahlungsdetails umfasst, konfiguriert ist; und
einen Sender (23), der zum Senden der Zahlungsaufforderung, welche die Zahlungsdetails umfasst, an ein Zahlungsverarbeitungssystem, um die Zahlung zu tätigen, konfiguriert ist.

12. Zahlungsdienstsystem (20) nach Anspruch 11, welches ferner einen zweiten Sendeempfänger (22, 23) umfasst, der zum Empfangen der umgeleiteten Medienkomponente des Telefonanrufs und zum Implementieren einer Weiterleitung zumindest von Teilen der umgeleiteten Medienkomponente an den Händler/Dienstanbieter konfiguriert ist.

13. Zahlungsdienstsystem (20) nach einem der Ansprüche 11 oder 12, wobei der Prozessor (24), bei Empfang einer Bestätigung, dass das Zahlungsverarbeitungssystem die Zahlung getätigt hat, zum Verwenden der Signalisierungskomponente des Telefonanrufs zum Implementieren einer weiteren Umleitung der Medienkomponente des Telefonanrufs direkt von dem Kunden zu dem Händler/Dienstanbieter konfiguriert ist.

14. Verfahren zum Betreiben eines Zahlungsdienstsystems, das zum Implementieren einer Zahlung in Bezug auf einen Telefonanruf zwischen einem Kunden und einem Händler/Dienstanbieter konfiguriert ist, wobei der Telefonanruf aus einer Signalisierungskomponente und einer Medienkomponente besteht, wobei das Verfahren Folgendes umfasst:
Empfangen der Signalisierungskomponente des Telefonanrufs, wobei die Signalisierungskomponente über ein Zahlungsdienstsystem (20) geroutet wurde, und Implementieren einer Weiterleitung der Signalisierungskomponente an den Händler/Dienstanbieter;
Empfangen eines Hinweises, dass der Kunde eine Zahlung vornehmen muss, von einem Kommunikationsmanagementsystem des Händlers/Dienstanbieters, wobei der Hinweis Anrufidentifikationsdaten des Telefonanrufs umfasst;
bei Empfang des Hinweises, dass der Kunde eine Zahlung vornehmen muss, Verwenden der Signalisierungskomponente des Telefonanrufs zum Implementieren einer Umleitung der Medienkomponente des Telefonanrufs über das Zahlungsdienstsystem, um die Medienkomponente des Telefonanrufs direkt von dem Kunden zu empfangen,
Extrahieren von Zahlungsdetails des Kunden aus der umgeleiteten Medienkomponente; und
Senden einer Zahlungsaufforderung, welche die Zahlungsdetails umfasst, an ein Zahlungsverarbeitungssystem, um die Zahlung zu tätigen.

15. Verfahren nach Anspruch 14, welches ferner Folgendes umfasst:
Empfangen der umgeleiteten Medienkomponente des Telefonanrufs und Implementieren einer Weiterleitung zumindest von Teilen der umgeleiteten Medienkomponente an den Händler/Dienstanbieter.

16. Verfahren nach einem der Ansprüche 14 oder 15, welches ferner Folgendes umfasst:
bei Empfang einer Bestätigung, dass das Zahlungsverarbeitungssystem die Zahlung getätigt hat, Verwenden der Signalisierungskomponente des Telefonanrufs zum Implementieren einer weiteren Umleitung der Medienkomponente des Telefonanrufs direkt von dem Kunden zu dem Händler/Dienstanbieter.

17. Computerlesbares Medium, auf welchem computerimplementierbare Anweisungen gespeichert sind, welche, wenn sie durch einen programmierbaren Computer implementiert werden, den Computer zum Durchführen des Verfahrens nach einem der Ansprüche 1 bis 9 und 14 bis 16 veranlassen.

## Revendications

1. Procédé d'implémentation d'un paiement en relation avec un appel téléphonique entre un client et un commerçant/fournisseur de services, l'appel téléphonique consistant en un composant de signalisation et un composant média, le procédé comprenant :
lors de l'établissement de l'appel téléphonique, le routage du composant de signalisation vers le commerçant/fournisseur de services via un système de service de paiement et le routage du composant média directement du client au commerçant/fournisseur de services ;
au niveau d'un système de gestion de communication du commerçant/fournisseur de services, l'envoi d'une indication selon laquelle le client est tenu d'effectuer un paiement au système de service de paiement (S1) ; et
au niveau du système de service de paiement, lors de la réception de l'indication, ladite indication incluant des données d'identification d'appel de l'appel téléphonique, selon laquelle le client est tenu d'effectuer un paiement, l'utilisation du composant de signalisation de l'appel téléphonique pour implémenter une redirection du composant média de l'appel téléphonique via le système de service de paiement (S3), l'extraction de détails de paiement du client du composant média redirigé (S5), et la fourniture (S7) des détails de paiement à un système de traitement de paiement pour exécuter le paiement, dans lequel les détails de paiement sont communiqués du client au système de service de paiement sur le composant média en utilisant l'un quelconque de tonalités audio DTMF et d'un mot prononcé (par ex. en utilisant la reconnaissance vocale interactive (IVR)).

2. Procédé selon la revendication 1, et comprenant en outre :
au niveau du système de service de paiement, lors de la réception de la confirmation que le système de traitement de paiement a exécuté le paiement (S8), l'utilisation du composant de signalisation de l'appel téléphonique pour implémenter une redirection supplémentaire du composant média de l'appel téléphonique directement du client au commerçant/fournisseur de services (S10).

3. Procédé selon l'une quelconque des revendications 1 ou 2, et comprenant en outre :
au niveau du système de gestion de communication, la fourniture d'informations de transaction au système de service de paiement, les informations de transaction spécifiant des détails du paiement requis en relation avec une transaction entre le client et le commerçant/fournisseur de services ; et
au niveau du système de service de paiement, l'envoi des informations de transaction reçues au système de traitement de paiement avec les détails de paiement.

4. Procédé selon l'une quelconque des revendications 1 à 3, et comprenant en outre :
au niveau du système de gestion de communication du commerçant/fournisseur de services, lors de la détermination selon laquelle le client est tenu d'effectuer un paiement, la détermination des données d'identification d'appel pour l'appel téléphonique (S2), et l'envoi des données d'identification d'appel au système de service de paiement ; et
au niveau du système de service tiers, la réception des données d'identification d'appel en provenance du système de gestion de communication, et l'utilisation des données d'identification d'appel reçues pour identifier l'appel téléphonique pour lequel le composant média doit être redirigé.

5. Procédé selon la revendication 3, et comprenant en outre :
au niveau du système de gestion de communication du commerçant/fournisseur de services, lors de la détermination selon laquelle le client est tenu d'effectuer un paiement, la détermination des données d'identification d'appel pour l'appel téléphonique et de données d'identification de transaction pour identifier les informations de transaction associées au paiement requis, et l'envoi des données d'identification d'appel et des données d'identification de transaction au système de service de paiement ; et
au niveau du système de service tiers, la réception des données d'identification d'appel et des données d'identification de transaction en provenance du système de gestion de communication, l'utilisation des données d'identification d'appel reçues pour identifier l'appel téléphonique pour lequel le composant média doit être redirigé, l'utilisation des données d'identification de transaction reçues pour identifier les informations de transaction pour le paiement, et la mise en corrélation des informations de transaction avec l'appel téléphonique identifié.

6. Procédé selon la revendication 5, dans lequel la mise en corrélation des informations de transaction avec l'appel téléphonique identifié permet au système de service de paiement d'associer les informations de transaction aux détails de paiement communiqués sur le composant média de l'appel téléphonique, et le système de service de paiement envoie ensuite les informations de transaction et les détails de paiement associés au système de traitement de paiement pour exécuter le paiement.

7. Procédé selon l'une quelconque des revendications 5 ou 6, dans lequel les données d'identification de transaction pour identifier les informations de transaction associées au paiement requis comprennent :
un identifiant d'agent unique pour un agent du commerçant/fournisseur de services qui a fourni les informations de transaction au système de service de paiement ;
un identifiant d'ordinateur unique pour un ordinateur du commerçant/fournisseur de services qui a fourni les informations de transaction au système de service de paiement ; et
un identifiant de transaction unique assigné au paiement requis.

8. Procédé selon l'une quelconque des revendications 4 à 7, dans lequel les données d'identification d'appel comprennent un ou plusieurs parmi :
une estampille temporelle pour le début de l'appel téléphonique ;
un numéro de téléphone du client ;
un numéro de téléphone du commerçant/fournisseur de services vers lequel l'appel téléphonique a été routé ;
un numéro de téléphone d'un agent du commerçant/fournisseur de services qui prend en charge l'appel téléphonique ;
des informations d'en-tête extraites de paquets de données qui comprennent l'appel téléphonique ; et
un identifiant d'appel unique assigné à l'appel téléphonique.

9. Procédé selon l'une quelconque des revendications précédentes, dans lequel les détails de paiement extraits du média redirigé comprennent un ou plusieurs parmi :
un numéro de compte primaire, un numéro de carte de crédit, ou un numéro de carte de débit ;
un code de vérification de carte ;
un numéro d'émission de carte ;
une date de validité et/ou une date d'expiration de carte ; et
un mot de passe ou un code PIN.

10. Système de gestion de communication (10) d'un commerçant/fournisseur de services configuré pour permettre l'implémentation d'un paiement en relation avec un appel téléphonique entre un client et le commerçant/fournisseur de services, l'appel téléphonique consistant en un composant de signalisation et un composant média, le système de gestion de communication comprenant :
un premier récepteur (12) configuré pour recevoir le composant de signalisation de l'appel téléphonique, le composant de signalisation ayant été routé vers le système de gestion de communication (10) via un système de service de paiement ;
un second récepteur (22) configuré pour recevoir directement du client le composant média de l'appel téléphonique ;
une interface (15) configurée pour accepter une entrée indiquant que le client est tenu d'effectuer un paiement ;
un processeur (14) configuré pour générer une indication selon laquelle le client est tenu d'effectuer un paiement incluant des données d'identification d'appel de l'appel téléphonique ; et
un émetteur (13) configuré pour envoyer l'indication au système de service de paiement.

11. Système de service de paiement (20) configuré pour implémenter un paiement en relation avec un appel téléphonique entre un client et un commerçant/fournisseur de services, l'appel téléphonique consistant en un composant de signalisation et un composant média, le système de service de paiement comprenant :
un premier émetteur-récepteur (22, 23) configuré pour recevoir le composant de signalisation de l'appel téléphonique, le composant de signalisation ayant été routé via un système de service de paiement (20), et pour implémenter la poursuite du routage du composant de signalisation vers le commerçant/fournisseur de services ;
un récepteur (22) configuré pour recevoir une indication selon laquelle le client est tenu d'effectuer un paiement en provenance d'un système de gestion de communication du commerçant/fournisseur de services, ladite indication incluant des données d'identification d'appel de l'appel téléphonique ;
un processeur (24) configuré pour, lors de la réception de l'indication selon laquelle le client est tenu d'effectuer un paiement, utiliser le composant de signalisation de l'appel téléphonique pour implémenter une redirection du composant média de l'appel téléphonique via le système de service de paiement (20) pour recevoir directement du client le composant média de l'appel téléphonique, extraire des détails de paiement du client du composant média redirigé, et générer une demande de paiement incluant les détails de paiement ; et
un émetteur (23) configuré pour envoyer la demande de paiement incluant les détails de paiement à un système de traitement de paiement pour exécuter le paiement.

12. Système de service de paiement (20) selon la revendication 11, et comprenant en outre un second émetteur-récepteur (22, 23) configuré pour recevoir le composant média redirigé de l'appel téléphonique, et pour implémenter la poursuite du routage d'au moins des parties du composant média redirigé vers le commerçant/fournisseur de services.

13. Système de service de paiement (20) selon l'une quelconque des revendications 11 ou 12, dans lequel le processeur (24) est configuré pour, lors de la réception de la confirmation que le système de traitement de paiement a exécuté le paiement, utiliser le composant de signalisation de l'appel téléphonique pour implémenter une redirection supplémentaire du composant média de l'appel téléphonique directement du client au commerçant/fournisseur de services.

14. Procédé de fonctionnement d'un système de service de paiement configuré pour implémenter un paiement en relation avec un appel téléphonique entre un client et un commerçant/fournisseur de services, l'appel téléphonique consistant en un composant de signalisation et un composant média, le procédé comprenant :
la réception du composant de signalisation de l'appel téléphonique, le composant de signalisation ayant été routé via un système de service de paiement (20), et l'implémentation de la poursuite du routage du composant de signalisation vers le commerçant/fournisseur de services ;
la réception d'une indication selon laquelle le client est tenu d'effectuer un paiement en provenance d'un système de gestion de communication du commerçant/fournisseur de services, ladite indication incluant des données d'identification d'appel de l'appel téléphonique ;
lors de la réception de l'indication selon laquelle le client est tenu d'effectuer un paiement, l'utilisation du composant de signalisation de l'appel téléphonique pour implémenter une redirection du composant média de l'appel téléphonique via le système de service de paiement pour recevoir directement du client le composant média de l'appel téléphonique, l'extraction de détails de paiement du client du composant média redirigé ; et
l'envoi d'une demande de paiement incluant les détails de paiement à un système de traitement de paiement pour exécuter le paiement.

15. Procédé selon la revendication 14, et comprenant en outre :
la réception du composant média redirigé de l'appel téléphonique, et l'implémentation de la poursuite du routage d'au moins des parties du composant média redirigé vers le commerçant/fournisseur de services.

16. Procédé selon l'une quelconque des revendications 14 ou 15, et comprenant en outre :
lors de la réception de la confirmation que le système de traitement de paiement a exécuté le paiement, l'utilisation du composant de signalisation de l'appel téléphonique pour implémenter une redirection supplémentaire du composant média de l'appel téléphonique directement du client au commerçant/fournisseur de services.

17. Support lisible par ordinateur stockant des instructions implémentables par ordinateur qui, lorsqu'elles sont implémentées par un ordinateur programmable, amènent l'ordinateur à réaliser le procédé selon l'une quelconque des revendications 1 à 9 et 14 à 16.
